# EUROPÄISCHE PATENTSCHRIFT

(11) **EP 1 541 831 B1**
(45) Veröffentlichungstag und Bekanntmachung des Hinweises auf die Patenterteilung: **14.03.2007**
(21) Anmeldenummer: 04021843.0
(22) Anmeldetag: 14.09.2004
(51) Int. Cl.: F02B 63/04, F04B 17/03, H02K 5/22

(54) **Motor-Pumpenaggregat, und Klemmenstein**
Motor and pump combination with connector
Combinaison moteur et pompe avec borne

(30) Priorität: 08.12.2003 DE 20318991 U
(43) Veröffentlichungstag der Anmeldung: 15.06.2005
(73) Patentinhaber: HAWE Hydraulik GmbH & Co. KG, 81673 München (DE)
(72) Erfinder: Neumair, Georg, Dipl.-Ing (FH), 85402 Thalhausen (DE); Lörner, Gerhard, Dipl.-Ing. (FH), 85386 Eching (DE)
(74) Vertreter: Grünecker, Kinkeldey, Stockmair & Schwanhäusser Anwaltssozietät

(56) Entgegenhaltungen:
- EP-A- 0 962 654
- DE-A- 3 345 770
- DE-A- 10 114 354
- US-A- 3 218 490
- US-A- 3 308 316
- US-A- 4 639 065
- US-A- 5 408 154
- US-B1- 6 300 698
- US-B1- 6 315 528

## Beschreibung

Die Erfindung betrifft ein Motor-Pumpenaggregat gemäß Oberbegriff des Anspruchs 1 und einen Klemmenstein gemäß Oberbegriff des Anspruchs 4.

Flüssigkeitsdichte und druckdichte Durchführungen elektrischer Leitungen sind im allgemeinen Maschinenbau schwierig und mit relativ hohem Aufwand herzustellen. Dies gilt besonders für Motor-Pumpenaggregate, in denen ein Elektromotor, meist ein Unterölmotor, eine Hydraulikpumpe antreibt, und der Elektromotor und die Pumpe im Inneren eines Gehäuses gekapselt sind, das auch das Reservoir für das Hydrauliköl bildet. Denn im Betrieb variieren mechanische und thermische Einflüsse und auch die Duckverhältnisse, die an die Stromdurchführung zur außenliegenden Übergabeschnittstelle, meist in einem Klemmenkasten, hohe Anforderungen stellen. Für Motor-Pumpenaggregate der hier interessierenden Art ist es bekannt, einzelne Kabeladern in gebohrte Wandöffnungen des Gehäuses mit Silikon einzugießen. Der Fertigungsaufwand ist hoch und kostenintensiv. Ferner ist es bekannt, Kontaktstifte isoliert in die Gehäusewand einzusetzen, an die Innenanschlussleitungen und Außenanschlussleitungen angeschlossen werden. Für jeden Kontaktstift wird mit Übermaß eine Durchgangsöffnung in die Gehäusewand gebohrt. Der Kontaktstift ist eine Schraube mit einem an einen Gewindeabschnitt zum Schraubenkopf anschließenden glatten Schaftabschnitt, der in der Durchgangsöffnung mittels eines O-Ringes aus rußfreiem Gummi positioniert und zusätzlich durch innen und außen gegen die Gehäusewand gespannte Teflon-Ringe und eine auf den Gewindeabschnitt aufgeschraubte Mutter zwischen dem Kopf und der Mutter verspannt wird. Zuvor wird auf den Schaftabschnitt eine Anschlusslasche aufgefädelt. Nach dem Verspannen wird auf dem Gewindeabschnitt außen eine Anschlusslasche festgeschraubt. Dies ist kosten- und zeitaufwendig.

Bei dem als Tauchpumpe ausgebildeten Motor-Pumpenaggregat gemäß US 4 653 835 A sind die Kontaktstifte in den Thermoplast-Klemmenstein eingegossen. Der Dichtflansch ist am Ende einer Schraubhülse des Klemmensteins durch eine Einschnürung begrenzt, in die von außen ein mehrlagiger Dichtring als Dichtelement eingeknüpft ist. Der durch die Öffnung gesteckte Kernteil weist federnde Rippen auf, deren Enden sich an der der Gewindehülse abgewandten Seite der Gehäusewand verspreizen. Auf die Gewindehülse wird eine Haltemutter aufgeschraubt, die den Dichtring gegen eine Seite der Gehäusewand spannt, und die Enden der Rippen gegen die andere Seite der Gehäusewand zieht. Die Enden der Kontaktstifte sind jeweils von der Gewindehülse und vom Kernteil umgeben.

Bei einer aus US 6 250 956 B1 bekannten Stromdurchführung in einer Frontwand eines Verteilergehäuses stehen zum Anschließen von Leitungen die innenliegenden Enden von Kontaktzungen über die Rückseite eines einem Klemmenstein ähnlichen Einsetzteils vor.

Bei einem aus DE 33 45 770 A bekannten hydraulischen Stellmotor einer Klima- und Lüftungsanlage sind in einem flexiblen, von einer äußeren Metallhülse komprimierten Kunststoffteil mehrere Stifte gefasst, deren Enden mit Kabeln verlötet sind. Der flexible Kunststoffteil verschließt die Durchgangsöffnung der Metallhülse. Die Metallhülse ist in eine Öffnung des Motorgehäusebodens eingepresst und durchsetzt einen Zylinderboden mit einer Gleitpassung.

Bei einem aus US 3 308 316 A bekannten Tauchmotor ist eine Öffnung des Motorgehäuses durch einen doppelt konischen Stopfen aus flexiblem Material verschlossen. Im Stopfen sind Spleißklammem enthalten, die die Seelen von unten und von oben eingeführter Kabel verbinden. Der Stopfen wird durch konisch geformte Teile der Gehäuseöffnung komprimiert und enthält in nach außen offenen Schächten zu den SpleißklammernFüllelemente. Zur Abdichtung wird die Kompression des elastischen Stopfens eingesetzt.

Weiterer Stand der Technik ist enthalten in: EP 092 654A, DE 101 14 354 A, US 3 218 490 A, US 4 639 065 A, US 6 315 528 B1, US 6 300 698 B1 und US 5 408 154 A.

Der Erfindung liegt die Aufgabe zugrunde, ein Motor-Pumpenaggregat und einen Klemmenstein zu schaffen, bei denen eine kostengünstige und ausfallssichere elektrische Durchführung gegeben ist.

Die gestellte Aufgabe wird mit den Merkmalen des Anspruchs 1 und den Merkmalen des Anspruchs 4 gelöst.

Die Öffnung in der Gehäusewand des Motor-Pumpenaggregats ist nach Montieren des Klemmensteins öldicht verschlossen, wobei die inneren Anschlussenden der durch den Klemmenstein durchgehenden, verlängerten Kontaktstifte im Gehäuseinneren zum Anschließen weiterführender Leitungen frei liegen. Dies ist herstellungstechnisch einfach und kostengünstig, resultiert in einer einfachen und raschen Montage und in einer ausfallssicheren elektrischen Durchführung. Der Klemmenstein besteht, zumindest an vom Hydrauliköl benetzbaren Stellen und im Bereich der Öffnung aus ölbeständigem und elektrisch isolierendem Material. Die Kontaktstifte durchsetzen den Klemmenstein öldicht. Der Klemmenstein weist einen in die Öffnung passenden Kernteil und einen den Kernteil umfassenden Dichtflansch auf, vorzugsweise mit Schrauböffnungen im Dichtflansch, über die der Klemmenstein mit der Gehäusewand verschraubt wird. Der Dichtflansch weist eine den Kernteil umfassende Einlegenut für ein Dichtelement auf, das auch durch eine Dichtpaste konstituiert sein kann.

Der Klemmenstein aus elektrisch isolierendem, ölbeständigem Material mit den ihn öldicht durchsetzenden und über die Rückseite vorstehenden Kontaktstiften ist ein kostengünstiges, herstellungs- und montagetechnisch vorteilhaftes Mittel zur Herstellung einer fehlersicheren elektrischen Gehäuse-Durchführung, für Motor-Pumpenaggregate, weil das Dichtelement in der den Kernteil umgebenden Einlegenut sicher festgelegt ist. Das Anbringen von Anschlussleitungen ist wegen der über die Rückseite vorstehenden Anschlussenden der Kontaktstifte einfach. Alternativ lässt sich der Klemmenstein auch für andere Anwendungsfälle einsetzen, wenn zu einem Flüssigkeit oder ein anderes Medium enthaltenden Innenraum eine elektrische Durchführung herzustellen ist.

Obwohl bevorzugt wird, den Klemmenstein direkt in eine Öffnung der Gehäusewand einzusetzen, könnte der Klemmenstein auch außen auf die Gehäusewand aufgesetzt und öldicht festgelegt werden, so dass nur die inneren Anschlussenden der Kontaktstifte durch die Öffnung oder kleinere Öffnungen nach innen vorstehen. Eine Mischform ist ebenfalls denkbar, bei der in der Gehäusewand ein vertiefter Bereich passend zum Klemmenstein vorgesehen wird. In dem Bereich sind für die Kontaktstifte Öffnungen vorgesehen, die der Klemmenstein verschließt.

Wird der Klemmenstein bei dem Motor-Pumpenaggregat in die Öffnung eingesetzt, dann ist es zweckmäßig, ihn von innen oder von außen einzusetzen und, vorzugsweise, über dem Dichtflansch mit der Gehäusewand zu verschrauben.

Vorsichtshalber kann es zweckmäßig sein, den Klemmenstein in der Öffnung sogar öldicht zu vergießen.

Der Klemmenstein ist zweckmäßig ein Kunststoff-Spritzgussteil mit den bereits öldicht eingespritzten Kontaktstiften. Die moderne Spritzgusstechnik gestattet es ohne weiteres, die Kontaktstifte öldicht einzuspritzen. Dabei wird zweckmäßig ein druckfester starrer Kunststoff verwendet. Alternativ könnte der Klemmenstein ein Metall-Gussteils oder Druckgussteil sein.

Alternativ kann der Klemmenstein ein solcher Kunststoff-Spritzgussteil sein, in den die Kontaktstifte nur eingebettet sind, wobei, vorzugsweise, jeder Kontaktstift zur zusätzlichen Abdichtung einen O-Ring trägt. Der O-Ring kann in eine in der Rückseite vertieft geformte, das innere Anschlussende umgebende O-Ringfassung eingepresst sein, oder auch im Inneren des Klemmensteins oder näher bei der Außenseite positioniert sein.

Bei einer weiteren Ausführungsform ist der Klemmenstein ein solcher KunststoffSpritzteil mit eingeformten Durchgängen für die Kontaktstifte. Die nachträglich eingesetzten Kontaktstifte sind in den Öldurchgängen öldicht vergossen. Gegebenenfalls werden sie zusätzlich durch O-Ringe abgedichtet.

Bei einer weiteren Ausführungsform ist der Klemmenstein ein solcher Kunststoff-Spritzgussteil mit eingeformten Durchgängen für die Kontaktstifte. Die Kontaktstifte sind nur mit O-Ringen öldicht in die Durchgänge eingesetzt.

Weiterhin ist zweckmäßig, das innere Anschlussende jedes Kontaktstiftes als Kugelkopf zum Aufstecken einer Kontakthülse auszubilden. Dadurch lassen sich die Kontaktstifte nicht nur in Querrichtung nahe zueinander setzen, sondern gestaltet sich die Montage beim Anschließen besonders einfach. Der Kugelkopf kann an einem glatten zylindrischen Schaft durch ein kugeliges Ende mit einer dahinterliegenden Einschnürung zum zylindrischen Schaft hin gebildet sein. Dies sichert einen guten Sitz der Kontakthülse.

Das äußere Anschlussende des Kontaktstiftes kann ein Gewindeschaft sein, auf dem sich eine Anschlussleitung mit einer Lasche gut festlegen lässt, oder auf jede andere, zweckmäßige Weise.

Ein guter Halt der Kontaktstifte wird im Klemmenstein erhalten, wenn zwischen den Anschlussenden zwei beabstandete Bunde, vorzugsweise in Sechskantform, und zwischen diesen ein glatter Schaftabschnitt vorgesehen sind. Dadurch gestaltet sich die Montage der Kontaktstifte in dem vorgefertigten starren Klemmenstein besonders einfach.

Anhand der Zeichnung werden Ausführungsformen des Erfindungsgegenstandes erläutert. Es zeigen:
- Fig. 1: eine Seitenansicht eines Motor-Pumpenaggregats,
- Fig. 2: einen Querschnitt eines beispielsweise bei dem Pumpenaggregat der Fig. 1 verwendeten Klemmensteins,
- Fig. 3: eine Draufsicht des Klemmensteins,
- Fig. 4: eine Schnittansicht, analog zu Fig. 2, eines Details, und
- Fig. 5: eine Ansicht eines weiteren Details.

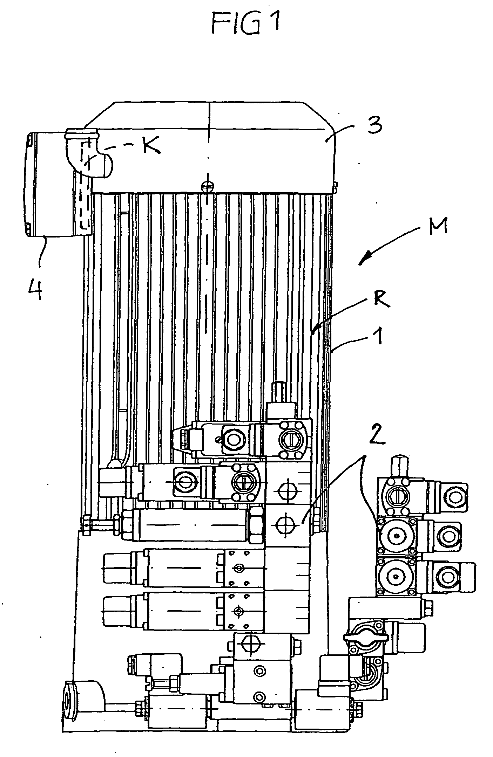

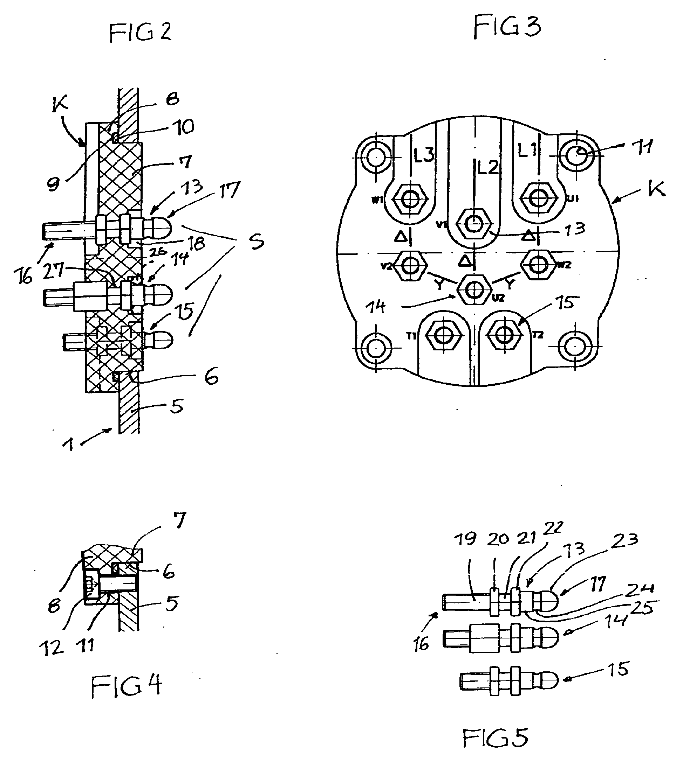

Ein elektrohydraulisches Motor-Pumpenaggregat M in Fig. 1 weist ein Gehäuse 1 auf, das ein Reservoir R für Hydrauliköl bildet. In dem Gehäuse 1 ist ein nicht gezeigter Elektromotor, vorzugsweise ein Unterölmotor, enthalten, der wenigstens eine ebenfalls nicht gezeigte Pumpe antreibt. Der Elektromotor und die Pumpe sind im Gehäuse 1 vollständig gekapselt. Außen am Gehäuse sind beispielsweise Ventilblöcke 2 montiert. Das obere Ende des Gehäuses 1 wird durch eine Endkappe 3, in der ein Kühlgebläse enthalten sein kann, abgeschlossen. Beispielsweise in diesem Bereich ist ein Klemmenkasten 4 vorgesehen, von dem aus eine elektrische Durchführung öl- und druckdicht ins Gehäuseinnere führt. In dem Klemmenkasten 4 ist ein Klemmenstein K vorgesehen, der anhand der Fig. 2 bis 5 näher erläutert wird. Im Gehäuse 1 kann beträchtlicher Innendruck herrschen.

In Fig. 2 weist das Gehäuse 1 eine Gehäusewand 5 auf, in der eine Öffnung 6 für die Montage des Klemmensteins K gebildet ist. Der Klemmenstein K weist einen Kernteil 7 und einen den Kernteil 7 umfassenden Dichtflansch 8 auf. Im Dichtflansch 8 ist unterseitig eine Einlegenut 9 für ein Dichtelement 10 vorgesehen. Der Kernteil 7 passt relativ genau in die Öffnung 6, während der Dichtflansch 8 über den Rand der Öffnung 6 übersteht, und (Fig. 4) außerhalb der Einlegenut Ohren aufweist, in denen Öffnungen 11 für Befestigungsschrauben 12 vorgesehen sind, mit denen der Klemmenstein K beispielsweise auf der Außenseite des Gehäuses 1 öldicht montiert wird. Das Dichtelement 10 könnte durch eine Vergussmasse oder eine pastöse Dichtung gebildet werden. Der Klemmenstein kann ferner entweder von innen und/oder von außen öldicht vergossen sein.

Im Klemmenstein K sind mehrere Kontaktstifte S enthalten, beispielsweise die Kontaktstifte 13, 14 und 15, deren jeder ein außenliegendes Anschlussende 16 und ein innenliegendes Anschlussende 17 besitzt. Die Kontaktstifte durchsetzen den Klemmenstein K und stehen mit den inneren Anschlussenden 17 über die Rückseite des Kernteils 7 vor. Um jedes innere Anschlussende 17 kann eine runde Vertiefung 18 in der Rückseite des Kernteils 7 geformt sein. Dort kann, beispielsweise zur zusätzlichen Abdichtung, ein O-Ring 26 (gestrichelt gezeigt) eingepresst sein. Der Klemmenstein K ist mit Durchgängen 27 aus einem ölbeständigen und elektrisch isolierenden Material, beispielsweise einem druckfesten, starren Kunststoff, geformt. Besonders zweckmäßig ist der Klemmenstein K ein Kunststoff-Spritzgussteil, in das die Kontaktstifte S entweder eingespritzt oder nachträglich in die eingeformten Durchgänge 27 öldicht eingesetzt sind.

Fig. 3 verdeutlich in einer Ansicht von außen die Verteilung mehrerer Kontaktstifte in dem Klemmenstein, von denen in Fig. 2 nur die Kontaktstifte 13, 14 und 15 näher gezeigt sind.

Zum öldichten Festlegen der Kontaktstifte im Klemmenstein K gibt es mehrere Möglichkeiten. Bereits erwähnt wurde das öldichte Umspritzen bei der Herstellung des Klemmensteins und/oder das zusätzliche Abdichten mittels O-Ringen 26. Die Kontaktstifte können auch nach dem Einsetzen in die Durchgänge 27 öldicht vergossen sein, und zwar von innen und/oder von außen.

Gemäß Fig. 5 ist jedes äußere Anschlussende 16 bei der gezeigten Ausführungsform ein Gewindeabschnitt 9, an den sich ein Bund 20 anschließt. Das innere Anschlussende 17 ist bei der gezeigten Ausführungsform ein Kugelkopf 23 an einem im Wesentlichen zylindrischen Schaft 25, wobei hinter dem Kugelkopf 23 eine Einschnürung 24 vorgesehen sein kann. Dieses Ausführungsbeispiel des inneren Anschlussendes 17 eignet sich besonders gut zum Aufstecken einer Kontakthülse. Alternativ könnte das innere Anschlussende 17 als Gewindeschaft wie das äußere Anschlussende ausgebildet sein. Im Abstand von dem erste Bund 20 ist ein zweiter Bund 22 vorgesehen, zwischen denen sich ein glatter Schaftabschnitt 21 erstreckt. Die Bunde 20, 22 sind beispielsweise als Sechskante ausgebildet. Die äußeren Anschlussenden 16 sind, wie die Fig. 2 und 5 verdeutlichen, deutlich unterscheidbar ausgebildet, beispielsweise indem die Gewindeabschnitte 16 unterschiedlich lang und/oder die Bunde unterschiedlich lang gestaltet sind, oder indem die inneren Anschlussenden unterschiedliche Durchmesser besitzen. Die Kontaktstifte S dienen im übrigen nicht nur für die Stromversorgung des Elektromotors, sondern können auch zum Anschließen innenliegender Sensoren oder anderer elektronischer oder elektrischer Komponenten benutzt werden. Die Kontaktstifte S können einstückig oder aus mehreren Komponenten zusammengesetzt sein. Für den Fall, dass die Kontaktstifte nachträglich in die Durchgänge 27 eingebaut werden, ist es zweckmäßig, zumindest die Bunde 20 als Muttern auszubilden, die auf den Gewindeabschnitten 16 verschraubt werden können.

Alternativ könnte der Klemmenstein K auch von der Innenseite der Behälterwand 5 in die Öffnung 6 eingesetzt werden. An der Außenseite des Klemmensteins sind zweckmäßig bei den Anschlussenden 16 Buchstaben oder Markierungen vorgesehen, die auf die Bedeutung jedes Kontaktstiftes hinweisen. Solche Markierungen können natürlich auch an der Rückseite vorgesehen sein.

Obwohl der gezeigten Ausführungsform der Vorzug zu geben ist, ist es möglich, alternativ den Klemmenstein auf die Innen- oder Außenseite der Gehäusewand 5 zu montieren und in dieser nur Durchgänge für die Kontaktstifte freizulassen. Diese Durchgänge werden dann vom Klemmenstein K öldicht verschlossen, wobei gegebenenfalls auch eine spezielle Dichtung, passend zum Lochbild, benutzt werden kann. Ferner ist es möglich, nicht die Öffnung 6 in der Größe des Kernteils 7 zu formen, sondern eine vertiefte Fassung in der Größe des Kernteils 7 in der Gehäusewand 5 zu bilden, in der einzelne Durchtrittsöffnungen für je einen Kontaktstift oder eine kleinere Öffnung für alle Kontaktstifte geformt ist. Der Klemmenstein K könnte ferner als Basis-Spritzgussteil aus Kunststoff mit einem Lochbild an Durchgängen 27 vorgefertigt werden, das viele verschiedene Einsatzfälle, d.h. Kontaktstift-Gruppierungen, zulässt. Nicht von Kontaktstiften besetzte Durchgänge 27 können vergossen oder auf andere Weise öldicht verschlossen werden. Das Basis-Spritzgussteil kann so beispielsweise für Aggregate M mit Wechselstrom-, Gleichstrom-, 3-Phasen-Motor mit oder ohne Sensoren wie Thermo-, Druck- oder Füllstandssensoren gleichermaßen benutzt werden.

## Patentansprüche

1. Motor-Pumpenaggregat (M), mit einem ein Reservoir (R) bildenden Gehäuse (1), in dem ein Elektromotor und wenigstens eine vom Elektromotor angetriebene Pumpe gekapselt angeordnet sind, und mit abgedichtet durch die innenseitig vom Hydrauliköl benetzbare Gehäusewand (5) geführten metallischen Kontaktstiften (S), die außerhalb des Gehäuses mit Anschlussleitungen und im Gehäuseinneren mit zumindest zum Elektromotor führenden Leitungen verbindbar sind, wobei ein eine Öffnung (6) der Gehäusewand (5) öldicht verschließender Klemmenstein (K) aus elektrisch isolierendem, ölbeständigem Material vorgesehen ist, in das die Kontaktstifte (S) öldicht eingesetzt sind, die **durch** den Klemmenstein (K) bis über seine Rückseite bis ins Gehäuseinnere vorstehend verlängert sind und am Klemmenstein (K) innere und äußere, jeweils freiliegende Anschlussenden (16, 17) aufweisen, und wobei der Klemmenstein (K) einen in die Öffnung (5) passenden Kernteil (7) und einen den Kernteil (7) umfassenden Dichtflansch (8) aufweist, **dadurch gekennzeichnet, dass** der Dichtflansch (8) eine den Kernteil (7) umfassende Einlegenut (9) für ein Dichtelement (10) aufweist.

2. Motor-Pumpenaggregat nach Anspruch 1, **dadurch gekennzeichnet, dass** der Klemmenstein (K) von innen oder von außen in die Öffnung (6) eingesetzt, und, vorzugsweise, über in den Dichtflansch (8) eingeformte Schrauböffnungen (11), mit der Gehäusewand (5) verschraubt ist.

3. Motor-Pumpenaggregat nach wenigstens einem der vorhergehenden Ansprüche, **dadurch gekennzeichnet, dass** der Klemmenstein (K) in der Öffnung (6) öldicht vergossen ist.

4. Klemmenstein (K) aus elektrisch isolierendem, ölbeständigem Material, insbesondere für ein Motor-Pumpenaggregat (M), das ein ein Reservoir (R) bildendes Gehäuse (1) aufweist, in dem ein Elektromotor und wenigstens eine vom Elektromotor angetriebene Pumpe gekapselt angeordnet sind, und in dem mit einem von einem Dichtflansch (8) und einem Dichtelement (10) umgebenen Kernteil (7) in eine Öffnung (6) der Gehäusewand (5) eingepassten Klemmenstein (K) abgedichtet durch die innenseitig mit Hydrauliköl benetzbare Gehäusewand (5) geführte metallische Kontaktstifte (S) vorgesehen sind, die außerhalb des Gehäuses mit Anschlussleitungen und im Gehäuseinneren mit zumindest zum Elektromotor führenden Leitungen verbindbar sind, **dadurch gekennzeichnet, dass** der Dichtflansch (8) eine den Kernteil (7) umfassende Einlegenut (9) für das Dichtelement (10) aufweist, und dass die Kontaktstifte (S) mit inneren freiliegenden Anschlussenden (17) am Kernteil (7) über die Rückseite des Klemmensteins (K) vorstehen.

5. Klemmenstein nach Anspruch 4, **dadurch gekennzeichnet, dass** der Klemmenstein (K) ein Spritzgussteil mit den öldicht eingespritzten Kontaktstiften (S) ist.

6. Klemmenstein nach Anspruch 4, **dadurch gekennzeichnet, dass** der Klemmenstein (K) ein Spritzgussteil aus druckfestem starren Kunststoff mit den eingebetteten Kontaktstiften (S) ist, und dass jeder Kontaktstift zur zusätzlichen Abdichtung einen O-Ring (26) trägt, vorzugsweise einen in eine in der Rückseite vertieft geformte, das innere Anschlussende (17) umgebende O-Ringfassung (8) des Klemmensteins eingepressten O-Ring (26), vorzugsweise aus rußfreiem Gummi.

7. Klemmenstein nach Anspruch 4, **dadurch gekennzeichnet, dass** der Klemmenstein (K) ein Spritzgussteil aus druckfestem, starrem Kunststoff mit eingeformten Durchgängen (27) für die Kontaktstifte (S) ist, und dass die Kontaktstifte (S) in den Durchgängen öldicht vergossen und, vorzugsweise, zusätzlich durch O-Ringe (26) abgedichtet, sind.

8. Klemmenstein nach Anspruch 4, **dadurch gekennzeichnet, dass** der Klemmenstein (K) ein Spritzgussteil aus druckfestem, starren Kunststoff mit eingeformten Durchgängen (27) für die Kontaktstifte (S) ist, und dass die Kontaktstifte mit O-Ringen (26) öldicht in die Durchgänge (27) eingesetzt sind.

9. Klemmenstein nach Anspruch 4, **dadurch gekennzeichnet, dass** das innere Anschlussende (17) jedes Kontaktstifts (S) als Kugelkopf (23) zum Aufstecken einer Kontakthülse ausgebildet ist, vorzugsweise als glatter zylindrischer Schaft (25) mit einer Einschnürung (24) hinter dem Kugelkopf (23).

10. Klemmenstein nach Anspruch 4, **dadurch gekennzeichnet, dass** das äußere Anschlussende (16) jedes Kontaktstifts ein Gewindeschaft (19) ist.

11. Klemmenstein nach Anspruch 4, **dadurch gekennzeichnet, dass** jeder Kontaktstift (S, 13, 14, 15) zwischen den Anschlussenden (16, 17) zwei beabstandete Bunde (20, 22), vorzugsweise in Sechskantform, und zwischen diesen einen glatten Schaftabschnitt (21) aufweist, und dass, vorzugsweise, zumindest ein Bund (20) eine Mutter ist.

12. Klemmenstein nach Anspruch 4, **dadurch gekennzeichnet, dass** in der Einlegenut (9) als Dichtelement (10) eine Vergussmasse oder eine Dichtpaste angeordnet ist.

## Claims

1. Motor/pump assembly (M), with a housing (1) which forms a reservoir (R) and in which are arranged, encased, an electric motor and at least one pump driven by the electric motor, and with metallic contact pins (S) which are led, sealed off, through the housing wall (5) capable of being wetted on the inside by the hydraulic oil and which are connectable outside the housing to junction lines and inside the housing to lines leading at least to the electric motor, a terminal block (K) being provided which closes, oil-tight, an orifice (6) of the housing wall (5) and consists of electrically insulating oil-resistant material into which are inserted, oil-tight, the contact pins (S) which are prolonged so as to project through the terminal block (K) beyond its rear side into the inside of the housing and on the terminal block (K) have inner and outer junction ends (16, 17) exposed in each case, and the terminal block (K) having a core part (7) fitting into the orifice (5) and a sealing flange (8) surrounding the core part (7), **characterized in that** the sealing flange (8) has for a sealing element (10) an insertion groove (9) surrounding the core part (7).

2. Motor/pump assembly according to Claim 1, **characterized in that** the terminal block (K) is inserted into the orifice (6) from inside or from outside and is preferably screwed to the housing wall (5) via screw orifices (11) integrally formed into the sealing flange (8).

3. Motor/pump assembly according to at least one of the preceding claims, **characterized in that** the terminal block (K) is grouted, oil-tight, in the orifice (6).

4. Terminal block (K) consisting of electrically insulating oil-resistant material, in particular for a motor/pump assembly (M) having a housing (1) which forms a reservoir (R) and in which are arranged, encased, an electric motor and at least one pump driven by the electric motor, and in which are provided metallic contact pins (S) which are led, sealed off, by a terminal block (K) fitted into an orifice (6) of the housing wall (5) by means of a core part (7) surrounded by a sealing flange (8) and a sealing element (10), through the housing wall (5) capable of being wetted on the inside with hydraulic oil and which can be connected outside the housing to junction lines and inside the housing to lines leading at least to the electric motor, **characterized in that** the sealing flange (8) has for the sealing element (10) an insertion groove (9) surrounding the core part (7), and **in that** the contact pins (S) project with inner exposed junction ends (17) on the core part (7) beyond the rear side of the terminal block (K).

5. Terminal block according to Claim 4, **characterized in that** the terminal block (K) is an injection moulding having the contact pins (S) injected, oil-tight.

6. Terminal block according to Claim 4, **characterized in that** the terminal block (K) is an injection moulding consisting of pressure-resistant rigid plastic with the embedded contact pins (S), and **in that** each contact pin, for additional sealing-off, carries an O-ring (26), preferably an O-ring (26), preferably consisting of soot-free rubber, which is pressed into an O-ring socket (8) of the terminal block, the said O-ring socket being formed, recessed, in the rear side and surrounding the inner junction end (17).

7. Terminal block according to Claim 4, **characterized in that** the terminal block (K) is an injection moulding consisting of pressure-resistant rigid plastic with integrally formed passages (27) for the contact pins (S), and **in that** the contact pins (S) are grouted, oil-tight, in the passages and are preferably sealed off additionally by means of O-rings (26).

8. Terminal block according to Claim 4, **characterized in that** the terminal block (K) is an injection moulding consisting of pressure-resistant rigid plastic with integrally formed passages (27) for the contact pins (S), and **in that** the contact pins are inserted, oil-tight, with O-rings (26) into the passages (27).

9. Terminal block according to Claim 4, **characterized in that** the inner junction end (17) of each contact pin (S) is designed as a spherical head (23) for plugging on a contact sleeve, preferably as a smooth cylindrical shank (25) with a contraction (24) behind the spherical head (23).

10. Terminal block according to Claim 4, **characterized in that** the outer junction end (16) of each contact pin is a threaded shank (19).

11. Terminal block according to Claim 4, **characterized in that** each contact pin (S, 13, 14, 15) has between the junction ends (16, 17) two spaced-apart collars (20, 22), preferably of hexagonal shape, and, between these, a smooth shank portion (21), and **in that** preferably at least one collar (20) is a nut.

12. Terminal block according to Claim 4, **characterized in that** a grouting compound or a sealing paste is arranged as a sealing element (10) in the insertion grove (9).

## Revendications

1. Groupe moto-pompe (M) comprenant un carter (1) formant un réservoir (R), dans lequel sont montés blindés un moteur électrique et au moins une pompe entraînée par ce dernier, et des connecteurs mâles (S) métalliques, guidés de façon étanche au travers de la paroi de carter (5), mouillable du côté intérieur par de l'huile hydraulique, lesquels connecteurs peuvent être raccordés à l'extérieur du carter à des lignes de jonction et à l'intérieur du carter à au moins des lignes menant au moteur électrique, une borne (K) en un matériau isolant électriquement, résistant à l'huile, fermant de façon étanche à l'huile une ouverture (6) de la paroi de carter (5), étant alors prévue, borne dans laquelle sont logés de façon étanche à l'huile les connecteurs mâles (S), qui sont prolongés en saillie au travers de la borne (K), au-delà de son côté arrière, jusque dans l'intérieur du carter, et présentent sur la borne (K) des extrémités de jonction (16, 17) intérieures et extérieures, respectivement dégagées, et la borne (K) présentant une partie de noyau (7) adaptée à l'ouverture (6) et une bride d'étanchéité (8) entourant la partie de noyau (7), **caractérisé en ce que** la bride d'étanchéité (8) présente une gorge d'insertion (9), entourant la partie de noyau (7), pour un élément d'étanchéité (10).

2. Groupe moto-pompe suivant la revendication 1, **caractérisé en ce que** la borne (K) est mise en place de l'intérieur ou de l'extérieur dans l'ouverture (6) et est vissée de préférence, par l'intermédiaire d'ouvertures filetées (11) conformées dans la bride d'étanchéité (8), avec la paroi de carter (5).

3. Groupe moto-pompe suivant l'une au moins des revendications précédentes, **caractérisé en ce que** la borne (K) est scellée dans l'ouverture (6) de façon étanche à l'huile.

4. Borne (K) en matériau isolant électriquement, résistant à l'huile, en particulier pour un groupe moto-pompe (M), qui comporte un carter (1) formant un réservoir (R), dans lequel sont montés blindés un moteur électrique et au moins une pompe entraînée par ce dernier, et dans lequel sont prévus des connecteurs mâles métalliques (S), guidés de façon étanche au travers de la paroi de carter (5) mouillable du côté intérieur par de l'huile hydraulique, avec une borne (K) ajustée dans une ouverture (6) de la paroi de carter (5) par une partie de noyau (7) entourée par une bride d'étanchéité (8) et un élément d'étanchéité (10), lesquels connecteurs peuvent être raccordés à l'extérieur du carter à des lignes de jonction et à l'intérieur du carter à au moins des lignes menant au moteur électrique, **caractérisée en ce que** la bride d'étanchéité (8) présente une gorge d'insertion (9), entourant la partie de noyau (7), pour l'élément d'étanchéité (10), et que les connecteurs mâles (S) dépassent du côté arrière de la borne (K), sur la partie de noyau (7), par des extrémités de jonction intérieures (17) dégagées.

5. Borne suivant la revendication 4, **caractérisée en ce que** la borne (K) est une pièce moulée par injection avec les connecteurs mâles (S) injectés de façon étanche à l'huile.

6. Borne suivant la revendication 4, **caractérisée en ce que** la borne (K) est une pièce moulée par injection en matière plastique rigide, résistante à la pression, avec les connecteurs mâles (S) enrobés, et que chaque connecteur mâle supporte pour une étanchéité supplémentaire un joint torique (26), de préférence un joint torique (26) emmanché dans une monture de joint torique (8), conformée en creux dans le côté arrière et entourant l'extrémité de jonction intérieure (17), de la borne, préférentiellement en caoutchouc sans noir de carbone.

7. Borne suivant la revendication 4, **caractérisée en ce que** la borne (K) est une pièce moulée par injection en matière plastique rigide, résistante à la pression, avec des passages (27) conformés pour les connecteurs mâles (S), et que les connecteurs mâles (S) sont scellés de façon étanche dans les passages et, de préférence, étanchéifiés en supplément par des joints toriques (26).

8. Borne suivant la revendication 4, **caractérisée en ce que** la borne (K) est une pièce moulée par injection en matière plastique rigide, résistante à la pression, avec des passages conformés (27) pour les connecteurs mâles (S), et que les connecteurs mâles sont mis en place de façon étanche à l'huile dans les passages (27) avec des joints toriques (26).

9. Borne suivant la revendication 4, **caractérisée en ce que** l'extrémité de jonction intérieure (17) de chaque connecteur mâle (S) est configurée sous forme de tête sphérique (23) pour l'emmanchement d'un connecteur femelle, de préférence sous forme de tige cylindrique lisse (25) avec un rétrécissement (24) derrière la tête sphérique (23).

10. Borne suivant la revendication 4, **caractérisée en ce que** l'extrémité de jonction extérieure (16) de chaque connecteur mâle est une tige filetée (19).

11. Borne suivant la revendication 4, **caractérisée en ce que** chaque connecteur mâle (S, 13, 14, 15) présente entre les extrémités de jonction (16, 17) deux collets (20, 22) distants l'un de l'autre, de préférence en forme de six pans, et entre ces derniers une section de tige lisse (21), et que, de préférence, au moins un collet (20) est un écrou.

12. Borne suivant la revendication 4, **caractérisée en ce qu'**une masse de scellement ou une pâte d'étanchéité est disposée dans la gorge d'insertion (9) en tant qu'élément d'étanchéité (10).
